# EUROPEAN PATENT APPLICATION

(11) **EP 2 511 792 A1**
(43) Date of publication of application: **17.10.2012**
(21) Application number: 11162583.6
(22) Date of filing: 15.04.2011
(51) Int. Cl.: G06F 3/01, G06F 3/03

(54) **Hand-mountable device for providing user input**

(71) Applicant: Research In Motion Limited, Waterloo, ON N2L 3W8 (CA)
(72) Inventor: Griffin Jason, Tyler, Waterloo Ontario N2L 3W8 (CA)
(74) Representative: MERH-IP Matias Erny Reichl Hoffmann

(57) **Abstract**

According to some aspects of the disclosure there is provided a device (100) for providing input to a computer that is mountable to a user's hand. The device comprises a sensing module (104) that senses interactions between a digit (110) of the hand (108) and a surface (120) of the hand. The sensing module determines one of a plurality of regions (122,124) of the surface of the hand in which the sensed interaction occurs. The device further generates an input to a computer as a function of the determined region.

## Description

### Field

Aspects of the disclosure relate to devices for providing user input such as remote navigation devices for providing input to computing devices.

### Background

Various user devices for providing user input are known for use with computing devices. Common devices for providing user input include remote navigation devices such as a computer mouse that tracks motion of the mouse over a surface. Other navigation devices include track ball devices, touch pads and touch screens. Navigation devices may be used in conjunction with various computing devices including home computers, laptop computers, mobile communication devices, mp3 and video players, heads-up displays, etc.

Optical navigation modules, ball sensors, capacitive sensors and resistive sensors are commonly used in a mouse or other remote navigation devices to provide control movement of a cursor on a display and/or perform other functions such as scrolling windows and documents, selecting items, etc. Remote navigation devices may include various buttons or other inputs that work in conjunction with the navigation sensor to activate and perform different functions.

### Summary

According to one aspect of the disclosure, there is provided a device comprising: a sensing module mountable to a hand for sensing interaction between a digit of a hand and a surface of the hand, the sensing module determining one of a plurality of regions of the surface of the hand in which the sensed interaction occurs; and an output generator for generating an output as a function of the determined one of the plurality of regions in which the sensed interaction occurs.

In some embodiments, sensing interaction between a digit of a hand and a surface of the hand comprises sensing movement of the digit across the surface of the hand.

In some embodiments, the output generator generates the output as a function of both the sensed movement and the determined one of the plurality of regions in which the sensed movement occurs.

In some embodiments, at least one of the plurality of regions comprises the surface of a finger.

In some embodiments, the sensing module comprises an optical sensor.

In some embodiments, the optical sensor is configured to recognize at least one optical indicator.

In some embodiments, each optical indicator comprises a color or pattern or combination thereof.

In some embodiments, each optical indicator is distinct from other optical indicators.

In some embodiments, the device further comprises a housing for mounting the sensing module to the hand and the sensing module is integrated in the housing.

In some embodiments, the sensing module comprises a fingerprint sensor.

In some embodiments, the sensing module comprises at least one capacitive or resistive sensor.

In some embodiments, the at least one capacitive or resistive sensor forms a sensing surface over at least two of the plurality of regions.

In some embodiments, the sensing module is configured to be mounted on the thumb.

In some embodiments, the sensing module is configured to be mounted on the surface of one or more fingers of the hand.

In some embodiments, sensing module is integrated in a glove for wearing on the hand.

According to another aspect of the disclosure, there is provided an apparatus comprising: the device as described above or below; and a computer-readable medium having computer-executable instructions stored thereon that, when executed by a computer, control the computer to: receive input from the device; and perform at least one function based on the received input.

In some embodiments, controlling the computer to perform the at least one function based on the received input comprises controlling the computer such that each at least one function is performed based on sensed interaction in a respective one of the plurality of regions of the hand.

In some embodiments, controlling the computer such that each at least one function is performed based on the sensed interaction in the respective one of the plurality of regions of the hand comprises controlling the computer such that: movement of the cursor along a first axis of a display is performed based on sensed interaction in a first of the plurality of regions of the hand; and movement of the cursor along a second axis of the display is performed based on sensed interaction in a second of the plurality of regions of the hand.

In some embodiments, the at least one function comprises a selecting function.

In some embodiments, the at least one function comprises a scrolling function.

According to another aspect, there is provided a method comprising: sensing interaction between a digit of a hand and a surface of the hand; determining one of a plurality of regions of the surface of the hand in which the sensed interaction occurs; and generating an output as a function of the determined one of the plurality of regions in which the sensed interaction occurs.

### Brief Description of the Drawings

Aspects of the disclosure will now be described in greater detail with reference to the accompanying diagrams, in which:
Figure 1A is a functional block diagram of a device for providing input to a computer;
Figure 1B is a flow chart of a method according to some embodiments;
Figure 2A is a perspective view of a device for providing input to a computer, the device including an optical sensor;
Figure 2B is a perspective view of the device of Figure 2A mounted to a hand;
Figure 3 is a functional block diagram of the device of Figure 2A and a computer;
Figure 4 is a perspective view of a device for providing input to a computer, the device including a fingerprint sensor;
Figure 5 is a perspective view of the device of Figure 4 mounted to a hand;
Figure 6 is a functional block diagram of the device of Figure 4 and a computer;
Figure 7A is a perspective view of a device for providing input to a computer, the device including a capacitive sensor and being mounted to a hand;
Figure 7B is a functional block diagram of the device of Figure 7A and a computer;
Figure 8A is a perspective view of a device for providing input to a computer, the device including a resistive sensor and being mounted to a hand;
Figure 8B is a functional block diagram of the device of Figure 8 and a computer;
Figure 9 is a flowchart of a process of controlling a computer to receive and utilize input from the device of Figure 1;
Figure 10 is a flowchart of a specific example of the process shown in Figure 9; and
Figure 11 is a flowchart of a specific example of the process shown in Figure 10.

### Detailed Description

The terms computer and computing device used herein refer to any device comprising a processor and capable of receiving input to be processed. For example, a computer or computer device may refer to a desktop or laptop type computer comprising a display, a processor, and other conventional components. Computer or computing device may also refer to mobile communication devices including gaming consoles, portable electronics such as mp3 players and any other similar devices.

It may be desirable to provide a remote control device that is easy to manage and use and doesn't require a surface such as a table top. Some aspects of the disclosure relate to a device that may be used to remotely control a computing device while doing activities such as walking or exercising or that can be used for presentations, TV or for sound interface or possibly interfaces that are mounted on a user's head (in glasses, for example).

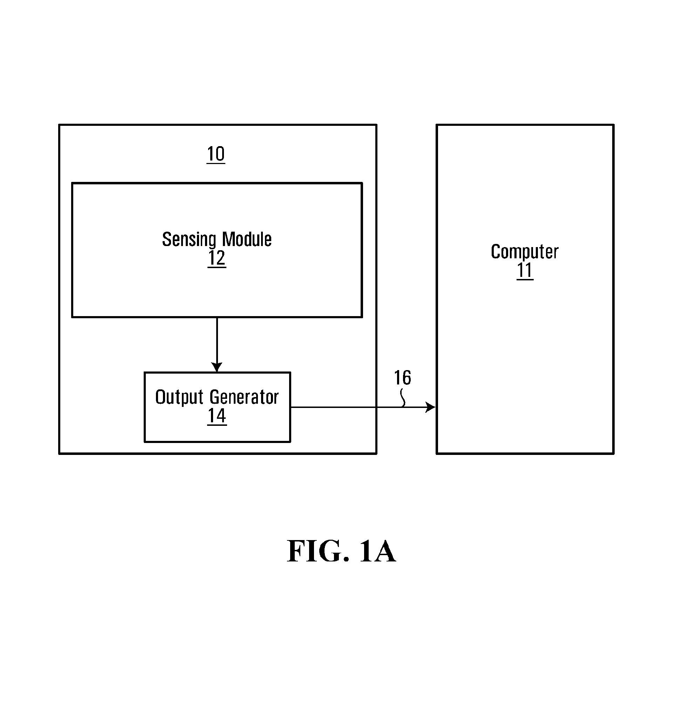

Figure 1A is a functional block diagram of a device 10, according to one aspect of the disclosure. The device 10 may provide user input to a computer 11 as shown, by way of example, in Figure 1A. The device 10 includes a sensing module 12 and an output generator 14. The sensing module 12 is mountable to a hand for sensing interaction between a digit (finger or thumb) of a hand and a surface of the hand. The sensing module determines one of a plurality of regions of the surface of the hand in which the sensed interaction occurs. In the example shown in Figure 1A, the output generator 14 generates an output for input to the computer 11 as a function of the determined one of the plurality of regions in which the sensed interaction occurs.

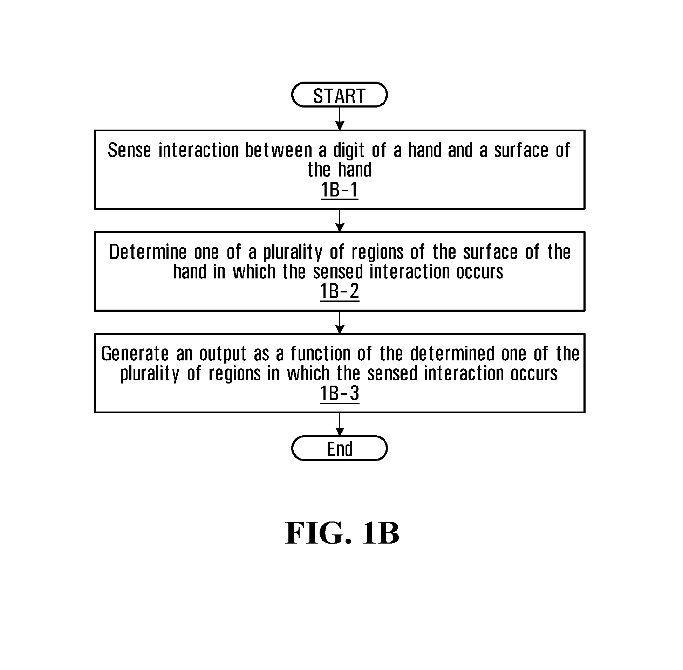

Figure 1B is a flowchart of a method according to some embodiments that may, for example, be performed by the device 10 shown in Figure 1A. At block 1 B-1, an interaction is sensed between a digit of a hand and a surface of the hand. At block 1 B-2, one of a plurality of regions of the surface of the hand in which the sensed interaction occurs is determined. At step 1 B-3, an ouput is generated as a function of the determined one of the plurality of regions in which the sensed interaction occurs.

In some embodiments, sensing the interaction between the digit of a hand and the surface of the hand comprises sensing movement of the thumb or finger across the surface of the hand. Turning again to Figure 1A, in some embodiments, the output generator 14 generates the output as a function of both the sensed movement and the determined one of the plurality of regions in which the sensed movement occurs. The term interaction as used herein does not require that the surface of the thumb is in direct contact with the surface of the hand. Rather, in some embodiments, the interaction between the thumb and the surface of the hand is indirect through the sensing module 12 mounted on the hand. In some embodiments, one or more surfaces such as a glove is also intermediate the thumb or finger and the surface of the hand. In some embodiments where the sensing module is mounted to the thumb or finger, the sensing module 12 is capable of sensing interactions with a small separating distance between the sensing module 12 and the surface of the hand. In other words, direct contact with the sensing module 12 is not required in some embodiments.

Figure 1A shows communication path 16 between the output generator 14 and the computer 11 for providing input to the computer.

Embodiments are not limited to any particular method of providing communication of the output from the output generator 14 to the computer 11. The output generator 14 may, for example, include a Universal Serial Bus (USB) port for facilitating a USB connection with the computer 11. In some embodiments, wireless communication methods are used to provide output to the computer 11. The wireless communication methods may, for example, be Bluetooth™, or a Bluetooth Human Interface Devices™ (Bluetooth HID) protocol. One skilled in the art will appreciate that a variety of known methods are suitable for facilitating communication of the output from the output generator 14 to the computer 11.

Power may be provided to the device 10 by any suitable power supply hardware. In some embodiments, for example, the device 10 is connectable to the computer 11 via a USB cable and the USB cable provides power to the device 10. In some embodiments, a battery or power cord is used for providing power to the device 10.

In some embodiments, the computer 11 includes a processor and a memory coupled to the processor. In some embodiments, the computer 11 further comprises a display, although a display is not required for the computer 11 to be suitable for use with the device 10. In some embodiments, the computer 11 includes further hardware and/or software elements.

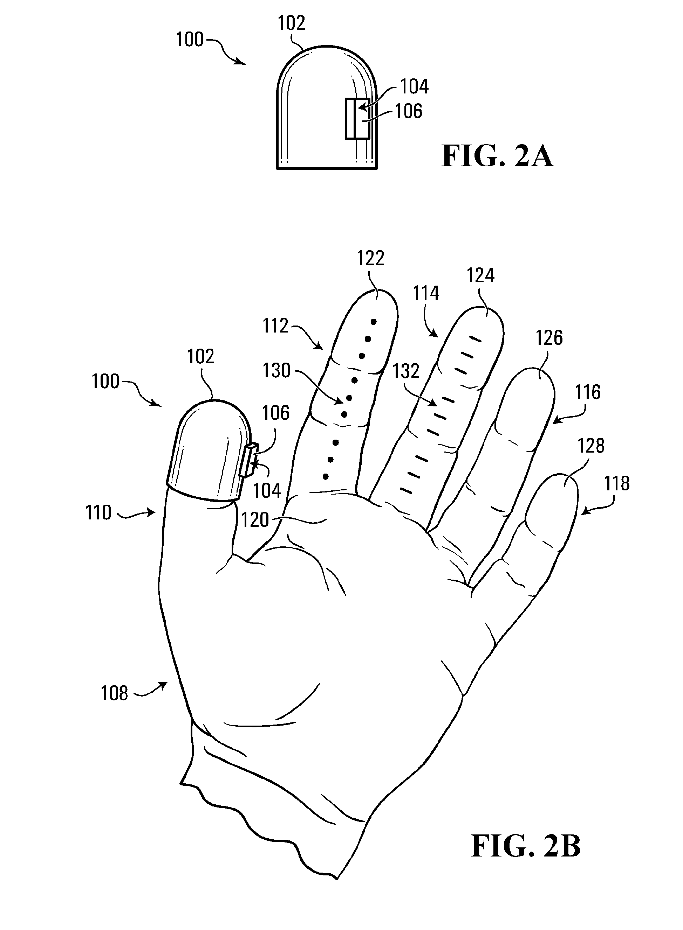

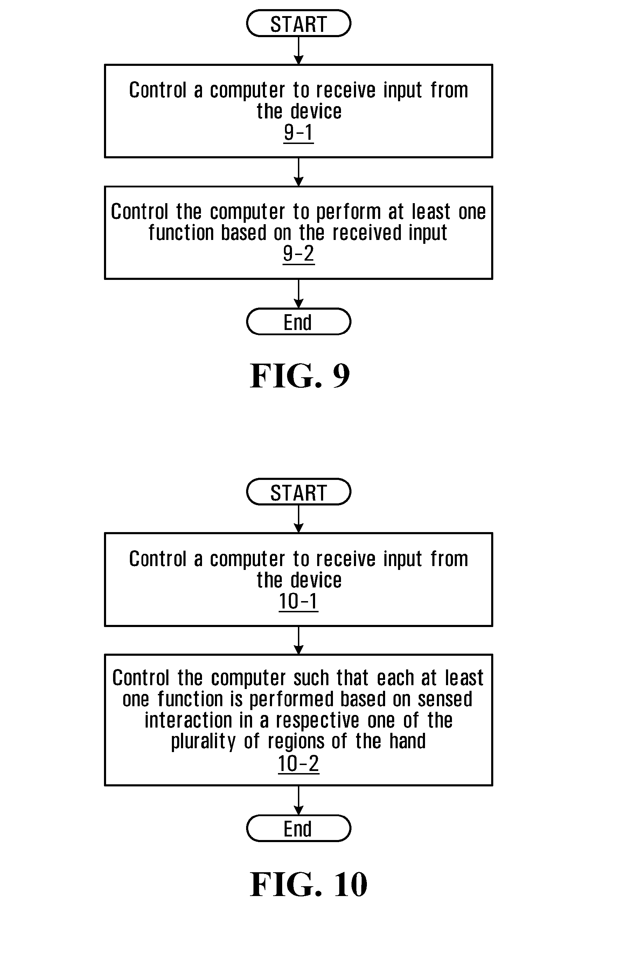

As will be described below with reference to Figures 9 to 11, according to some aspects, the computer 11 can perform various functions as a function of the output, received as input, from the device. Functions include, but are not limited to, movement of a cursor on the display 26, scrolling, selecting, etc. Before describing how a computer may use the input provided by the device 10, specific example embodiments of the device 10 are described with reference to figures 2A to 8B.

In some embodiments, the device 10 allows a user to have full use of their hand because the user does not have to directly hold the input system.

More generally, in some embodiments, the device 10 includes a housing for mounting the sensing module 12to the hand. In some embodiments, the sensing module 12 is integrated into the housing. In other embodiments, the sensing module 12 is integrated in a glove to be worn on the hand. In other embodiments, a band is worn on a digit to mount the device 10 on the hand.

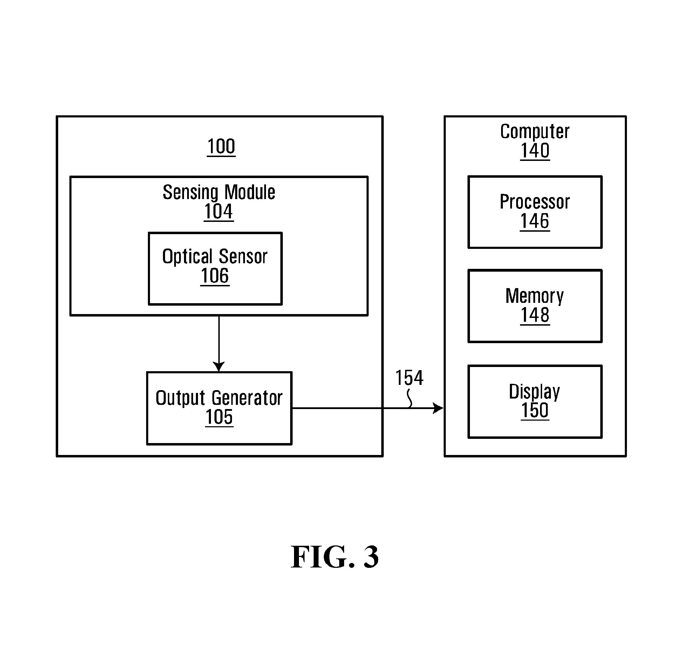

Figure 2A shows device 100 for providing user input to a computer according to one embodiment. The device 100 is a specific example the device 10 (shown in Figure 1A). The device 100 comprises a housing 102, which is generally thimble shaped to accommodate wearing or mounting the device on a thumb or finger, a sensing module 104 and an output generator 105 (shown in Figure 3 and described below).

The housing 102 may be mounted on a user's hand. In particular, the housing 102 is shaped to fit on a thumb of a user's hand.

In this embodiment, the sensing module 104 includes an optical sensor 106. The sensing module 104 is configured to sense movement of the optical sensor 106 across a surface a hand. The sensing module 104 is further configured to determine one of a plurality of regions of the user's hand in which the sensed interaction occurs. In particular, in this example, the sensing module 104 is configured to recognize one or more optical indicators. The term optical indicator used herein is refers to any markings or features that are identifiable and distinguishable by the optical sensor 106. In some embodiments, each optical indicator comprises a color or pattern or combination thereof. Specific examples of optical indicators are discussed below. In some embodiments, the sensing module 104, including the optical sensor 106, is an optical navigation module. An optical navigation module may essentially function as an image based, analog input system that is suitable for tracking movement.

In some embodiments, the optical sensor 104 is programmed to recognize patterns. In some embodiments, the optical sensor 106 is effectively a camera which operates by doing rapid image comparison and detecting a shift in the image. For example, in some embodiments, the optical sensor is an optical joystick. The optical joystick may operate in "black and white" for simplicity. For example, in some embodiments, the optical joystick transmits and reads infared (IR) light in order to capture and compare images. IR light would be suitable for "black and white" type pattern recognition. Optical joysticks which recognize color may also be used. For example, in some embodiments, a visible light sensor is used in the sensing module 104.

The sensing module 104 is integrated into the housing 102 such that the optical sensor 106 faces away from the housing 102 and the sensing module 104 may be mounted on a hand.

Figure 2B shows the device 100 mounted to a user's hand 108. The hand 108 includes a thumb 110, a first finger 112, a second finger 114, a third finger 116 and a fourth finger 118. The hand 108 includes a surface 120 that includes a first finger surface 122, a second finger surface 124, a third finger surface 126 and a fourth finger surface 128.

In some embodiments, at least one of the plurality of regions of the surface 120 of the hand 108 (in which a sensed interaction can be determined to have occurred) comprises the surface of a finger. In this embodiment, the plurality of regions of the surface 120 of the hand 108 includes the first finger surface 122 and the second finger surface 124. The first finger surface 122 is partially covered with a dot pattern 130. The second finger surface 124 is covered with a line pattern 132. The sensing module 104 is configured to recognize the dot pattern 130 and line pattern 132. Thus, the sensing module may distinguish between the first finger surface 122 and the second finger surface 124, as will be described in more detail below. In some embodiments, different regions of the hand 108 and/or more regions of the hand 108 are distinguished using optical indicators.

The dot pattern 130 and line pattern 132 are provided on the first finger surface 122 and the second finger surface 124 respectively in any suitable manner. In some embodiments, the patterns 130 and 132 are on stickers that adhere to the first finger surface 122 and the second finger surface 124. In other embodiments, the patterns 130 and 132 are drawn directly on the hand. In still other embodiments a glove or sleeve fitted to the fingers is imprinted with the dot pattern 130 and line pattern 132. One skilled in the art will appreciate that various other manners exist that are suitable for providing surfaces of fingers with optical indicators.

As shown in Figure 2B, the housing 102 of the device 100 is placed over the end of the thumb 210 in order to mount the device 100. The sensing module 104 is arranged in the housing 102 such that the optical sensor 106 is angled to face the adjacent fingers surfaces 122, 124, 126, 128 when the device 100 is mounted on the thumb 110.

Figure 3 is a functional block diagram of the device 100 and a computer 140 to which the device 100 may provide user input. As shown in Figure 3, the device 100 includes the sensing module 104 and an output generator 105. The sensing module 104 includes the optical sensor 106. In some embodiments, the sensing module 104 includes other elements not shown such as a processor for processing sensor data, a memory or other hardware or software components. The output generator 105 may be implemented as a memory containing instructions for execution by a processor, by hardware, or by a combination of instructions stored in a memory and additional hardware, to name a few examples. In some embodiments, the sensing module 104 and the output generator 105 share components such as a processor or a memory.

The computer 140, in this example, includes processor 146, memory 148 and display 150.

Figure 3 also shows an communication path 154 between the output generator 105 and the computer 140 for providing input from the output generator 105 to the computer 140. Various examples of ways to provide communication of signals from the output generator 105 to the computer 140 are described above.

The operation of the device 100 will now be explained with reference to Figures 2B and 3. Turning to Figure 2B, the user may move thumb 110 such that the thumb, via the optical sensor 106, interacts with the surface 120 of the hand 108. In particular, the user may touch or slide the optical sensor 106 on the surface 120 of the hand 108. The sensing module 104 senses the interaction between the thumb 110 and the surface 120 of the hand. In particular, as the thumb 110, wearing the device 100, touches and/or moves across the surface 120 of the hand 108, sensing module 104 tracks the movement and monitors surface 120 of the hand 108 for optical indicators.

The sensing module 104 determines which of a plurality of regions of the hand 108 the sensed interaction occurs. In this example, the plurality of regions of the hand 108 includes the first finger surface 122 having the dot pattern 130 and the second finger surface 124 having the line pattern 132. Specifically, as mentioned above, the sensing module is configured to recognize the dot pattern 130 and the line pattern 132. Thus, if the dot pattern 130 is recognized by the sensing module 104 during the sensed interaction, the sensing module 104 determines that the sensed interaction occurred on the first finger surface 122. On the other hand, if the line pattern 132 is recognized by the sensing module 104 during the sensed interaction, the sensing module 104 determines that the sensed interaction occurred on the second finger surface 124.

Turning to Figure 3, the output generator 105 generates output for input to the computer 140 as a function of the determined one of the plurality of regions in which the sensed interaction occurs (i.e. the first finger surface 122 or the second finger surface 124). In this embodiment, the output generator 105 generates the output as a function of both any sensed movement and the determined first finger surface 122 or second finger surface 124 in which the sensed interaction occurs.

The dot pattern 130 and line pattern 132 shown in Figure 2B are only example optical indicators. In some other embodiments, other patterns, colors, or combinations of patterns and colors are used. For example, a sensing module that is configured to recognize and distinguish between two or more colors will be used in conjunction with colors applied to two or more regions of the users hand in some embodiments. Optical indicators in other embodiments include any other suitable method of distinguishing two surfaces to the sensing module 104.

In the example shown in Figure 2B, the dot pattern 130 and line pattern 132 are two different optical indicators in different respective regions of the surface 120 of the hand 108. However, in some embodiments, two or more of the plurality of regions of the surface 120 of the hand 108 have the same optical indicator. In some embodiments, more or fewer regions of the surface 120 of the hand 108 have optical indicators thereon. In some embodiments, the sensing module 104 distinguishes between regions having no optical indicator and one or more regions having an optical indicator.

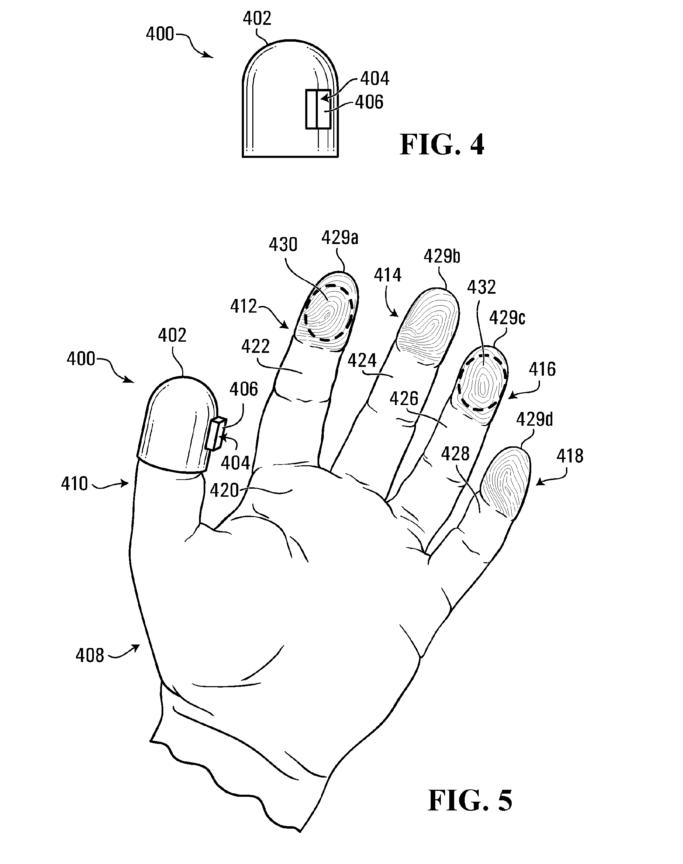

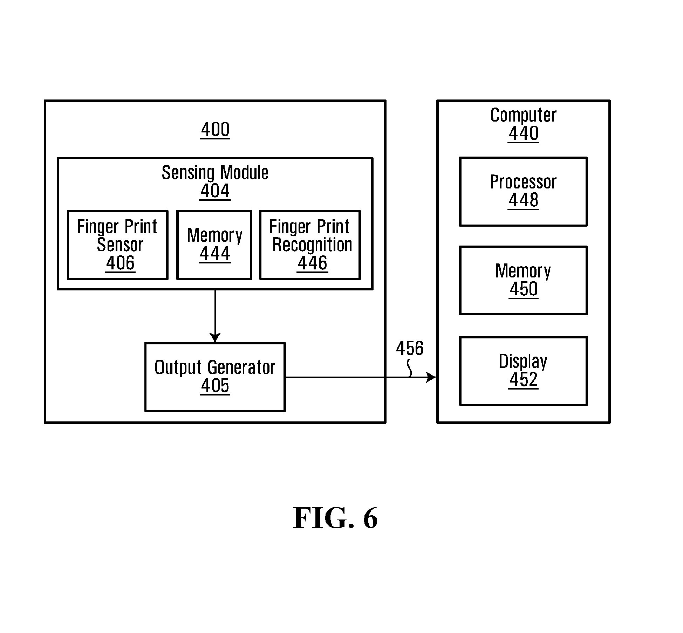

Figure 4 shows device 400, according to another embodiment, that may provide user input to a computer. The device 400 is a specific example the device 10 (shown in Figure 1A). The device 400 includes a housing 402, which is generally thimble shaped to accommodate wearing or mounting the device on a thumb or finger, a sensing module 404 integrated in the housing 402 and an output generator 405 (shown in Figure 6 and described below). The housing 402 is similar to the housing 102 shown in Figure 2A. The sensing module 404 comprises a fingerprint sensor 406 and other elements described below with respect to Figure 6. The fingerprint sensor 406 is configured to sense interaction between a digit of a user's hand and the surface of the user's hand. In particular, the fingerprint sensor 406 is configured to read or capture images of skin surface details of the fingers, and possibly the palm, of the hand. The fingerprint sensor 406 is further configured to track movement across a skin surface. The sensing module 404 is integrated into the housing 402 such that the fingerprint sensor 406 faces away from the housing 402.

In some embodiments, the fingerprint sensor 406 comprises a conventional line reading style fingerprint sensor. A line reading style fingerprint sensor may accurately track a user's finger movement (e.g. a swipe across the sensor). Such sensors are conventionally used as navigation inputs on laptops. Example companies that make such sensors are Fujitsu and Authentec.

Figure 5 shows the device 400 mounted to a hand 408. The hand 408 includes a thumb 410, first finger 412, second finger 414, third finger 416 and fourth finger 418. The hand 408 includes an inner surface 420 that includes a first finger surface 422, second finger surface 424, third finger surface 426 and fourth finger surface 428. The first, second, third and fourth finger surfaces 422, 424, 426 and 428 include first, second, third and fourth skin surface details 429a, 429b, 429c and 429d respectively, which are partially shown in Figure 5.

The sensing module 404 is configured to determine one of a plurality of regions of the user's hand 408 in which the sensed interaction occurs. In particular, the sensing module 404 is configured to recognize a plurality of regions of the surface 420 of the hand 408. The manner by which the sensing module 404 is configured in some embodiments is described below. In this specific example, the sensing module 404 is configured to recognize and distinguish first and second regions 430 and 432 shown in Figure 5. The first and second regions 430 and 432 are on the first finger surface 422 and the third finger surface 426 respectively and include a portion of the first and third skin surface details 429a and 429c respectively. Embodiments are not limited to the sensing module 404 distinguishing the first and second regions 430 and 432 shown in Figure 5. Different regions are recognized in some embodiments. More than two regions are recognized in some embodiments.

As shown in Figure 5, the device 400 is mounted on the thumb 410 by placing the housing 402 over the end of the thumb 410. The sensing module 404 is positioned on the housing 402 such that the fingerprint sensor 406 is angled to face the adjacent fingers surfaces 422, 424, 426, 428 when the device 400 is mounted to the thumb 410.

Figure 6 is a functional block diagram of the device 400 and a computer 440 to which the device 400 may provide user input. As shown in Figure 6, the device 400 includes the sensing module 404 and the output generator 405. In this example, the sensing module 404 includes the fingerprint sensor 406, a memory 444 and a fingerprint recognition module 446. The sensing module 404 may also include other elements not shown such as a processor, or other hardware or software components. The output generator 405 and the fingerprint recognition module 446 may be implemented as a memory containing instructions for execution by a processor, by hardware, or by a combination of instructions stored in a memory and additional hardware, to name a few examples. In some embodiments, the sensing module 404 and the output generator 405 share components such as a processor or memory.

The computer 440 includes processor 448, memory 450 and display 452. As described above, any computing device capable of receiving user input may be suitable for use with the device 400.

Figure 6 also shows an communication path 456 between the output generator 405 and the computer 440 for providing input from the output generator 405 to the computer 440. Various examples of ways to provide communication of signals from the output generator 405 to the computer 440 are described above. The operation of the device 400 will now be explained with reference to Figures 5 and 6.

In this example, a user uses the thumb 410 to interact with the surface 420 of the hand 408 including at least one of the first and second regions 430 and 432. The sensing module 404 senses the interaction. The sensing module 404 also determines one of the plurality of regions (i.e. the first and second regions 430 and 432) in which the sensed interaction occurs. Specifically, the sensing module 404 recognizes and distinguishes between the plurality of regions of the surface 420 of the hand 408, including the first and second regions 430 and 432.

Initially configuring the sensing module 404 to recognize the first and second regions 430 and 432 may be accomplished in a number of different ways. For example, in some embodiments, the device 400 is configured to be switched to a calibration or training mode. In such embodiments, the device 400 is switched between operating modes in any manner known in the art. Next, the user sequentially passes the fingerprint sensor 406 over each of the plurality of regions of the surface 420 of the hand 408 to be recognized by the sensing module 404. In this example, the user first passes the fingerprint sensor 406 over the first region 430 shown in Figure 5. In the configuration or training mode, the device 400 stores, in the memory 444, information sensed regarding the first skin surface details 429a in the first region 430. The user then passes the fingerprint sensor 406 over the second region 432. The device 400 then stores, in the memory 444, information sensed regarding the third skin surface details 429c in the second region 432. Of course, the order in which the plurality of regions of the surface 420 of the hand 408 are sensed for the purpose of configuring the sensing module 404 may be different.

After the device 400 has been configured in the manner described above, the user may switch the device 400 to a mode for providing user input to the computer 440. In this mode, the sensing module 404 senses interactions between the thumb 410 and the surface 420 of the hand 408 using the fingerprint sensor 406. The interactions include both stationary touching of the thumb 410 (including the mounted device 400) to the surface 420 of the hand 408 and movement of the thumb 410 across the surface 420 of the hand 408.

The sensing module 404 determines one of the plurality of regions of the surface 420 of the hand 408 in which the sensed interaction occurs. Specifically, in this example, the fingerprint recognition module 446 monitors data obtained from the fingerprint sensor 406 and compares the data to the stored fingerprint information in memory 444. If the sensed skin surface detail information is determined to match the first region 430, the sensing module 404 determines that the interaction occurred in the first region 430. If the sensed skin surface detail information is determined to match the second region 432, then the sensing module 404 determines that the interaction occurred in the second region 432.

The output generator 405 generates output for input to the computer 440 as a function of the determined one of the plurality of regions in which the sensed interaction occurs (i.e. the first region 430 or second region 432). In some embodiments, the output generator 405 also generates the output as a function of movement of the fingerprint sensor 406 across the surface 420 of the hand 408.

By way of example, the user might first touch the first region 430 with their thumb 410, such that the fingerprint sensor 406 contacts the first region 430. The sensing module 404 determines that the thumb 410 is interacting with the first region 430 and the output generator 405 generates output indicating interaction with the first region 430. Next, the user might move the thumb 410 around the surface 420 of the hand 408 outside of both the first and second regions 430 and 432. In some embodiments, the device 400 senses this movement outside of the recognized regions and generates the input as a function of on the movement alone.

The device 400 may be configured to recognize more or less regions of the surface 420 of the hand. For example, in some embodiments, the surface 420 of the hand 408 not including the first or second regions 430 and 432 comprises a further one of the plurality of regions of the surface 420 of the hand 408. In this case, if the fingerprint recognition module 446 does not recognize the sensed skin surface details, the sensing module 404 determines that the interaction occurred in the region not including the first or second regions 430 or 432. The output generator 405 then generates the output as a function of the determined region (the region not including the first or second regions 430 or 432).

The output generator 405 may provide the output as input to the computer 440 via any communication path 456 suitable for communication with a computer, as described above with respect to with the device 10 shown in Figure 1A.

In some embodiments, the sensing module 12, 104 or 404 (shown in Figures 1A, 2A and 4) is configured to provide a "click" type on/off switch functionality. One skilled in the art will appreciate that various methods and mechanisms may be utilized to provide a "click" type functionality. For example, in some embodiments, the sensing module 12, 104 or 404 is configured to form a depressible click button input similar to the buttons of a computer mouse. In some embodiments, "clicking" the module by pressing against a surface activates the sensing and/or input generating functionality of the device 10, 100 or 400. In some embodiments, button inputs are also present on other parts of the housing to provide additional inputs when pressed.

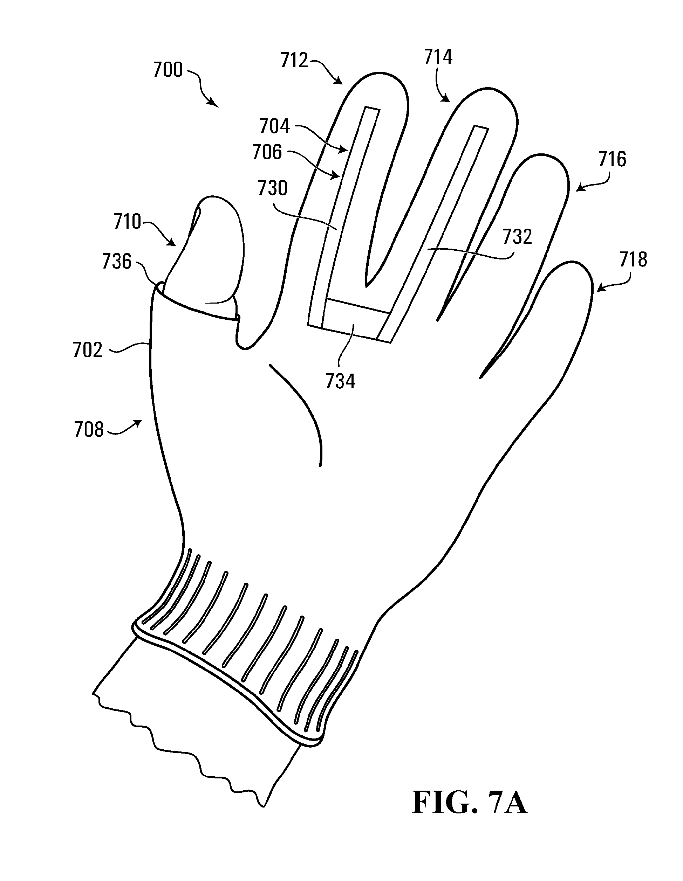

In some embodiments, the sensing module 12 of the device 10 (shown in Figure 1A) is mounted to the surface of the hand on which interactions are to be sensed, rather than to the end of the digit. Figure 7A shows a device 700 according to another embodiment that may provide user input to a computer. The device 700 is another specific example the device 10 (shown in Figure 1A).

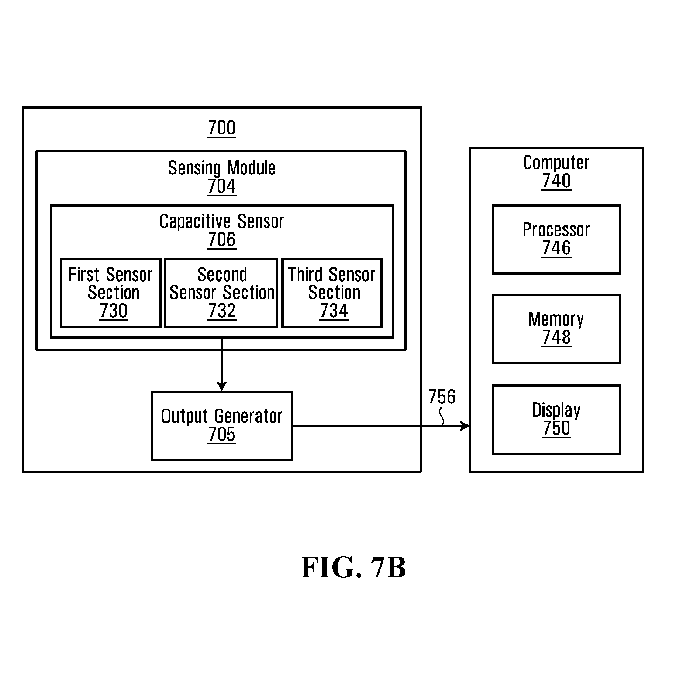

The device 700 comprises a glove 702 for wearing on a hand, a sensing module 704 integrated into the glove 702, and an output generator 705 (shown in Figure 7B and described below). The sensing module 704, in this embodiment, includes a capacitive sensor 706. The hand 708 includes a thumb 710 and fingers. The fingers are within respective glove finger sleeves. For simplicity, the glove finger sleeves and the fingers of the hand 708 will collectively be referred to herein as a first finger 712, a second finger 714, a third finger 716 and a fourth finger 718. As seen in Figure 7A, the capacitive sensor 706 includes a long flat capacitive strip including first, second and third capacitive sensor sections 730, 732 and 734. The first, second and third capacitive sensor sections 730, 732 and 734 are arranged on the glove 702 such that first capacitive sensor section 730 is over the first finger 712 when the glove 702 is worn on the user's hand 708. The second capacitive sensor section 732 is over the second finger 714. The third capacitive sensor section 734 connects the first capacitive sensor section 730 and the second capacitive sensor section 732 near the base of the first finger 712 and the second finger 714.

The sensing module 704 is configured to sense interactions between a thumb or finger and the portion of the surface of the hand covered by the capacitive sensor 706. The sensing module 704 is further configured to determine one of a plurality of regions in which the sensed interaction occurs. In particular, the first, second and third capacitive sensor sections 730, 732 and 734 of the capacitive sensor 706 are comprised of linear (i.e. one dimensional) sensor strips configured to sense lengthwise location and movement of a position where skin (of the thumb 710, for example) contacts the sections 730, 732 and 734. Thus, in this example, the first, second and third capacitive sensor sections 730, 732 and 734 form a sensing surface over three regions of the surface of the hand 708 in which interaction may be determined to occur. More or less sensing surfaces are formed in some embodiments. An example of capacitive sensor technology is the Synaptics capacitive ScrollStrip™. In some embodiments, one or more two dimensional capacitive touch sensors are used that are capable of sensing interaction location and movement in two dimensions rather than one dimension. As will be appreciated by one skilled in the art, the sensing module 704 may comprise other components not shown such as a processor, memory or other software or hardware components.

Figure 7B is a functional block diagram of the device 700 and a computer 740 to which the device 700 may provide user input. Figure 7B, shows the device 700 including the sensing module 704 and the output generator 705. The sensing module 704 includes the capacitive sensor 706. The capacitive sensor includes the first, second and third capacitive sensor sections 730, 732 and 734. The output generator 705 may be implemented as a memory containing instructions for execution by a processor, by hardware, or by a combination of instructions stored in a memory and additional hardware, to name a few examples. In some embodiments, the sensing module 704 and the output generator 705 share components such as a processor or a memory. The computer 740, in this example, includes processor 746, memory 748 and display 750. Figure 7B also shows an communication path 756 between the output generator 705 and the computer 740 for providing input from the output generator 705 to the computer 740. Various examples of ways to provide communication of signals from the output generator 705 to the computer 740 are described above.

In operation, the sensing module 704 senses interactions, including the position and movement, of the thumb 710 over the surface of the hand (via the first, second and third capacitive sensor sections 730, 732 and 734). The sensing module 704 determines one of the plurality of regions of the surface 120 of the hand in which the sensed interaction occurred (i.e. the region covered by the first, second, or third capacitive sensor section 730, 732 or 734). The output generator 705 generates output for input to a computer that is a function of the determined region of the surface of the hand (i.e. the first, second, or third capacitive sensor section 730, 732 or 734) in which the sensed interaction occurs. In some embodiments, this input is provided to a computer 740 in a similar manner as described above with respect to the other embodiments described herein with reference to Figures 1A to 6.

In some embodiments, the capacitive sensor 706 is divided into more or less regions that may be positioned anywhere on the hand suitable for sensing interactions with a digit.

Some capacitive sensors may be more sensitive to interactions with skin than some other generally non-conductive surfaces such as a glove surface. Therefore, in this example, the glove 702 is provided with a hole 736 for the thumb 710 to extend through when the glove 702 is worn. This enables the thumb 710 to contact the first, second and third capacitive sensor sections 730, 732 and 734 directly. In a glove according to other embodiments, the glove has a conductive surface in the region of the thumb 710 to provide good sensing contact with a capacitive sensor. In still other embodiments, the sensing module 704 shown in Figure 7A or a different sensing module is configured such that no special conductive surface or skin contact is required for the sensing module to sense position and movement.

In some embodiments, the sensing module 704 is adhered to the surface of the hand or positioned on the hand without being integrated into a glove.

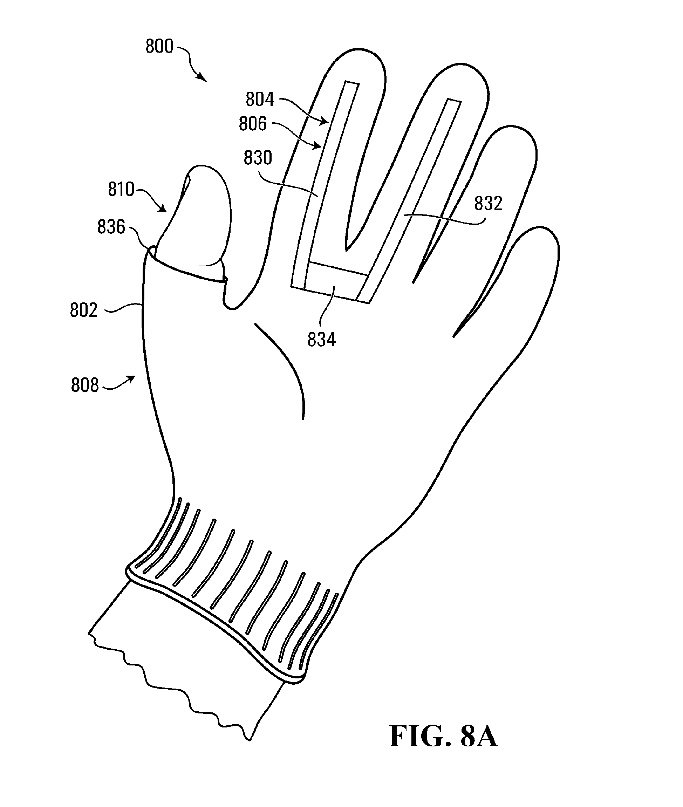

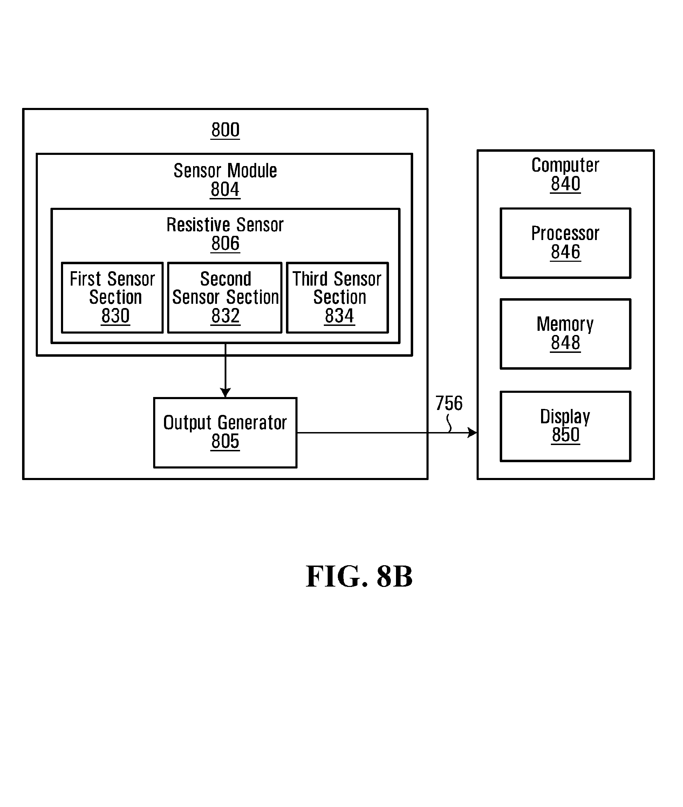

In some embodiments, a resistive sensor, rather than the capacitive sensor 706 is used. Figure 8A shows a device 800 according to another embodiment, which is similar to the device 700 shown in Figures 7A and 7B. The device 800 comprises a glove 802 for wearing on a hand, a sensing module 804 integrated into the glove 802, and an output generator 805 (shown in Figure 8B and described below). The sensing module 804, in this embodiment, includes a resistive sensor 806. The resistive sensor includes first, second and third resistive sensor sections 830, 832 and 834.

Figure 8B is a functional block diagram of the device 800 and a computer 840 to which the device 800 may provide user input. Figure 8B shows the device 800 including the sensing module 804 and an output generator 805. Figure 8B also shows the first, second and third resistive sensor sections 830, 832 and 834 of the resistive sensor 806. In some embodiments, the sensing module 804 includes other elements not shown such as a processor for processing sensor data, a memory or other hardware or software components. The output generator 805 may be implemented as a memory containing instructions for execution by a processor, by hardware, or by a combination of instructions stored in a memory and additional hardware, to name a few examples. In some embodiments, the sensing module 804 and the output generator 805 share components such as a processor or a memory. The computer 840, in this example, includes processor 846, memory 848 and display 850. Figure 8B also shows an communication path 856 between the output generator 805 and the computer 840 for providing input from the output generator 805 to the computer 840. Various examples of ways to provide communication of signals from the output generator 805 to the computer 840 are described above.

The operation of the device 800 is similar to the device 700 shown in figures 7A and 7B, except that interactions are sensed with the resistive sensor 806 rather than the capacitive sensor 706 shown in Figures 7A and 7B.

The devices 100, 400, 700 and 800 described above with reference to Figures 2A to 8B are provided as specific examples and embodiments are not limited to those particular embodiments. In some embodiments, the sensing module 12 (shown in Figure 1A) includes further hardware elements not integrated in a housing. For example, in some embodiments, some hardware elements are located in a band or further housing mountable on the wrist of the hand (not shown) or elsewhere so long as the hardware components are in communication with the optical sensor 106 via wire connection or wireless connection. In some embodiments, one or more of the particular features shown in Figures 2A to 8B are omitted.

In some embodiments, different types of sensing modules than those described above with reference to Figures 2A to 8B are used for sensing interactions between a thumb or fingers of the hand and the surface of the hand. In some embodiments, more than one sensing module is mounted on the thumb and/or fingers of the hand. In some embodiments the sensing module is mounted on the end of a finger, rather than on the end of the thumb as shown in Figures 2B and 5, the sensing module senses interactions of the finger with the thumb and/or palm of the hand. One skilled in the art will appreciate that other variations are possible.

Some aspects of the disclosure relate to an apparatus including the device as described above and a computer-readable medium having computer-executable instructions stored thereon that, when executed by a computer, control the computer as discussed below with reference to Figure 9. Some such embodiments also include the computer. In some embodiments, the computer-executable instructions function as a device driver when executed. By way of example, the computer-readable medium may be a CD, a hard drive, Random Access Memory (RAM) in a computer or any other suitable storage medium.

Figure 9 is a flowchart of a process showing how a computer is controlled to utilize input from the device. At block 9-1, the computer is controlled to receive input from the device. At block 9-2, the computer is controlled to perform at least one function based on the received input. In some embodiments, the at least one function performed by the computer includes one or more of movement of a cursor on a display, a scrolling function, a selecting function or any other function that may be controlled by user input.

Figure 10 is a flowchart of a specific example of the process shown in Figure 9. At block 10-1 the computer is controlled to receive input from the device. At block 10-2, the computer is controlled such that each at least one function is performed based on sensed interaction in a respective one of the plurality of regions of the hand. For example, sensed interaction in a first region may control performance of a first function and sensed interaction in a second region may control performance of a second function.

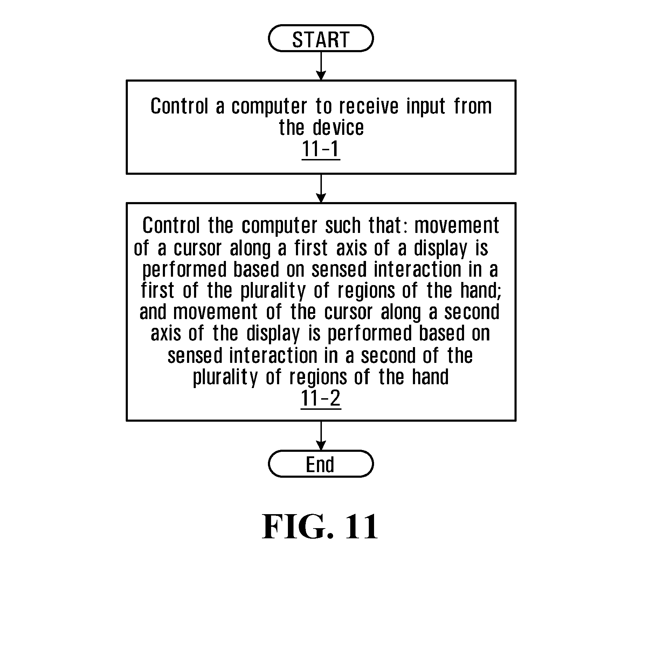

Figure 11 is a flowchart of a specific example of the process shown in Figure 10 where the at least one function includes movement of a cursor on a display. At block 11-1 the computer is controlled to receive input from the device. At block 11-2, the computer is controlled such that: movement of the cursor along a first axis is performed based on sensed interaction in a first of the plurality of regions of the hand; and movement of the cursor along a second axis is performed based on sensed interaction in a second of the plurality of regions of the hand. In some embodiments, the first and second axes of the display include the x-axis and/or y-axis of the display.

In some embodiments, the first and second regions may be the surfaces of first and second fingers respectively. A finger may provide a good range of navigational movement in one axis along the length of the finger. Thus, controlling cursor movement in one axis by lenthwise movement along the first finger, and controlling cursor movement in another axis by lengthwise movement along the second finger may provide a navigation scheme where navigation in each axis is not dependent on movement in along the width / transverse direction of any finger.

As mentioned above, functions that may be performed by the computer based on the received input include selecting and scrolling functions. For example, in some embodiments, sensed interaction in a given region of the hand controls scrolling of an application window or an opened document. In some embodiments, sensed interaction in another given region of the hand controls selecting one or more objects on a graphical user interface. In some embodiments, navigating the sensing module on one region (such as a first finger) allows a user to pick groups of letters, and navigating in another region (such as a second finger) lets the user pick from predicted words. In some embodiments, the device is used to navigate a menu system where interaction in one region (e.g. the first finger) is a top menu with multiple options and interaction in a second region (e.g. the second finger) allows the user to navigate a submenu of the category picked in the first menu. One skilled in the art will appreciate that various function may be performed by a computer according to various control schemes based on the received input.

The device according to embodiments described herein could also be used for any number of navigation functions (for example, linear navigation functions). Navigation functions could be used within applications or sets of applications on a computer (including computing devices such as mobile electronic device). By way of example, the device could be used to control a headset (such as a blue tooth mobile phone head set), mp3 player, or other mobile computing device. A user may wish to control a mobile device without actually holding the mobile device in their hand while walking or exercising, for example. The input device described herein may allow the user to input commands and/or navigate menus (such as contact lists, for example) etc. By way of further example, the input device described herein could be used to control a Global Positioning System (GPS) device. In this example, the user may select between menu options relating to time and distance information. A user may also use the device for inputting various fields, such address information, into the GPS device. These possible uses are provided only by way of example and one skilled in the art will appreciate that numerous other uses of the device described herein with reference to the Figures may be implemented.

Input received from the device by the computer may differ from conventional navigation devices. For example, input may include data reflecting absolute position of the sensed interaction (e.g. the position of the thumb on a particular finger) rather than, or in addition to, relative position with respect to sensed movement on the finger. By way of example, for relative position data, moving the thumb (such as in the embodiments shown in Figures 1 to 8B) along a user's finger from one spot on to a new spot may establish a relative position of the cursor on the display based on the sensed movement. However, in this example, lifting the sensor from the finger and placing it down in another location will not generate relative position data. Similarly, in another example, if a user is navigating a menu system, wherever the user first puts their thumb down on the surface of their hand, the display might present a default menu item. Moving the thumb in either direction along the surface of the hand might then effectively scroll through menu items. By contrast, for absolute position methods, the location of the displayed cursor, or the displayed menu item would specifically depend on the actual position of the interaction on the surface of the hand.

What has been described is merely illustrative of the application of the principles of aspects of the disclosure. Other arrangements and methods can be implemented by those skilled in the art without departing from the spirit and scope of the aspects of the disclosure.

## Claims

1. A device (10, 100, 400, 700), the device comprising:
a sensing module (12, 104, 404, 704) mountable to a hand (108, 408, 708) for sensing interaction between a digit (110, 410, 710) of a hand (108, 408, 708) and a surface (120, 420) of the hand (108, 408, 708), the sensing module (12, 104, 404, 704) determining one of a plurality of regions (122, 124, 430, 432) of the surface (120, 420) of the hand (108, 408, 708) in which the sensed interaction occurs; and
an output generator (14, 105, 405) for generating an output as a function of the determined one of the plurality of regions (122, 124, 430, 432) in which the sensed interaction occurs.

2. The device (10, 100, 400, 700) of claim 1, wherein sensing interaction between a digit (110, 410, 710) of a hand (108, 408, 708) and a surface (120, 420) of the hand (108, 408, 708) comprises sensing movement of the digit (110, 410, 710) across the surface (120, 420) of the hand (108, 408, 708).

3. The device (10, 100, 400, 700) of claim 2, wherein the output generator (14, 105, 405) generates the output as a function of both the sensed movement and the determined one of the plurality of regions (122, 124, 430, 432) in which the sensed movement occurs.

4. The device (10, 100, 400, 700) of any one of claims 1 to 3, wherein at least one of the plurality of regions (122, 124, 430, 432) comprises the surface of a finger (122, 124, 126, 128, 422, 424, 426, 428, 712, 714, 716, 718).

5. The device (100) of any one of claims 1 to 4, wherein the sensing module (104) comprises an optical sensor.

6. The device (100) of claim 5, wherein the optical sensor (104) is configured to recognize at least one optical indicator (130, 132), and, optionally each optical indicator (130, 132) comprises a color or pattern or combination thereof, and, optionally each optical indicator (130, 132) is distinct from other optical indicators (130, 132).

7. The device (100, 400, 700) of any one of claims 1 to 6, wherein the device (100, 400, 700) further comprises a housing (102, 402, 702) for mounting the sensing module (104, 404, 704) to the hand (108, 408, 708) and the sensing module (104, 404, 704) is integrated in the housing (102, 402, 702).

8. The device (400) of claim any one of claims 1 to 4 and 7, wherein the sensing module (404) comprises a fingerprint sensor (406), or wherein the sensing module (704) comprises at least one capacitive or resistive sensor (706, 806).

9. The device (700) of claim 8, wherein the sensing module (704) comprises the at least one capacitive or resistive sensor (706, 806), and the at least one capacitive or resistive sensor (706, 806) forms a sensing surface (730, 732, 734, 830, 832, 834) over at least two of the plurality of regions.

10. The device (100, 400) of any one of claims 1 to 9, wherein the sensing module (104, 404) is configured to be mounted on the thumb (110, 410), or wherein the sensing module (704) is configured to be mounted on the surface of one or more fingers (712, 714) of the hand.

11. The device (700) of any one of claims 1 to 10, wherein the sensing module (704) is integrated in a glove (702) for wearing on the hand.

12. An apparatus comprising:
the device (10, 100, 400, 700) of any one of claims 1 to 11; and
a computer-readable medium having computer-executable instructions stored thereon that, when executed by a computer (11, 140, 440), control the computer (11, 140, 440) to:
receive input from the device (10, 100, 400, 700); and perform at least one function based on the received input.

13. The apparatus of claim 12, wherein controlling the computer (11, 140, 440) to perform the at least one function based on the received input comprises controlling the computer (11, 140, 440) such that each at least one function is performed based on sensed interaction in a respective one of the plurality of regions (122, 124, 430, 432) of the surface (120, 420) of the hand (108, 408, 708).

14. The apparatus of claim 13, wherein controlling the computer (11, 140, 440) such that each at least one function is performed based on the sensed interaction in the respective one of the plurality of regions (122, 124, 430, 432) of the surface (120, 420) of the hand (108, 408, 708) comprises controlling the computer (11, 140, 440) such that:
movement of a cursor along a first axis of a display is performed based on sensed interaction in a first of the plurality of regions (122, 124, 430, 432); and
movement of the cursor along a second axis of the display is performed based on sensed interaction in a second of the plurality of regions (122, 124, 430, 432).

15. The apparatus of any one of claims 12 to 14, wherein the at least one function comprises at least one of a selecting function and a scrolling function.
